(19)

Europäisches
Patentamt

European
Patent Office

Office européen
des brevets

(11)     **EP 2 615 127 A2**

(12)                    **EUROPEAN PATENT APPLICATION**

(43) Date of publication:
   **17.07.2013   Bulletin 2013/29**

(51) Int Cl.:
   ***C08J 5/04*** *(2006.01)*

(21) Application number: **12193846.8**

(22) Date of filing: **22.11.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **16.01.2012   JP 2012006490**<br>   **25.10.2012   JP 2012235841**<br><br>(71) Applicant: **Sumitomo Rubber Industries, Ltd.**<br>   **Hyogo-ken (JP)** | (72) Inventors:<br> • **Miyazaki, Tatsuya**<br>   **Kobe-shi, Hyogo 651-0072 (JP)**<br> • **Miyazaki, Sumiko**<br>   **Kobe-shi, Hyogo 651-0072 (JP)**<br><br>(74) Representative: **Manitz, Finsterwald & Partner GbR**<br>   **Martin-Greif-Strasse 1**<br>   **80336 München (DE)** |

(54)    **Masterbatch, rubber composition, and pneumatic tire**

(57)    The present invention aims to provide a masterbatch which enables microfibrillated plant fibers to be well dispersed in a rubber composition so that they can provide reinforcement equal to or greater than that by conventional fillers; a rubber composition containing the masterbatch; and a pneumatic tire produced using the rubber composition. The present invention relates to a masterbatch containing a modified natural rubber with a phosphorus content of 200 ppm or less, and microfibrillated plant fibers. Preferably, the microfibrillated plant fibers in a primary form have an average fiber diameter of 4 nm to 10 $\mu$m and an average fiber length of 100 nm to 200 $\mu$m.

**EP 2 615 127 A2**

Printed by Jouve, 75001 PARIS (FR)

**Description**

TECHNICAL FIELD

The present invention relates to a masterbatch, a rubber composition containing the masterbatch, and a pneumatic tire produced using the rubber composition.

BACKGROUND ART

Addition of microfibrillated plant fibers (e.g. cellulose fibers) as filler to a rubber composition enables to reinforce the rubber composition and enhance the hardness and modulus of the rubber composition. Microfibrillated plant fibers, however, are poor in the compatibility with the rubber component and therefore in dispersibility, and thus they may cause deterioration in tensile properties and fuel economy. Hence, there is demand for a method of enhancing the dispersibility of microfibrillated plant fibers.

Patent Literature 1 discloses a method of improving the compatibility between the rubber component and microfibrillated plant fibers by chemically modifying the microfibrillated plant fibers. Even this method, however, is unsatisfactory and should be improved because such fibers have no advantage over conventional fillers, such as carbon black and/or silica, in term of reinforcement and cost.

CITATION LIST

PATENT LITERATURE

Patent Literature 1: JP 4581116 B

SUMMARY OF INVENTION

TECHNICAL PROBLEM

The present invention aims to provide a masterbatch which can solve the problems, and which enables microfibrillated plant fibers to be well dispersed in a rubber composition so that they can provide reinforcement equal to or greater than that by conventional fillers; a rubber composition containing the masterbatch; and a pneumatic tire produced using the rubber composition.

SOLUTION TO PROBLEM

The present invention relates to a masterbatch, comprising: a modified natural rubber with a phosphorus content of 200 ppm or less; and microfibrillated plant fibers.

Preferably, the microfibrillated plant fibers in a primary form have an average fiber diameter of 4 nm to 10 $\mu$m and an average fiber length of 100 nm to 200 $\mu$m.

Preferably, the microfibrillated plant fibers are present in an amount of 5 to 30 parts by mass per 100 parts by mass of the modified natural rubber.

The present invention also relates to a rubber composition, comprising the aforementioned masterbatch, wherein the microfibrillated plant fibers are present in an amount of 1 to 10 parts by mass per 100 parts by mass of the rubber component in the rubber composition.

Preferably, the rubber composition further comprises at least one of carbon black having a nitrogen adsorption specific surface area of 25 to 190 m$^2$/g and silica having a nitrogen adsorption specific surface area of 70 to 300 m$^2$/g, wherein the rubber composition has a total content of the carbon black and the silica of 25 to 80 parts by mass per 100 parts by mass of the rubber component in the rubber composition.

Preferably, the rubber composition has a ratio (E*a/E*b) of a complex modulus E*a in an extrusion direction to a complex modulus E*b in a direction perpendicular to the extrusion direction of 1.2 to 4.0, when the complex moduli E*a and E*b are measured at a temperature of 70°C and a dynamic strain of 2%.

Preferably, the rubber composition is for use in a tire component.

Preferably, the aforementioned tire component is a sidewall; a clinch; a base tread; a tie gum; a bead apex; or a tread for high performance tires.

The present invention also relates to a pneumatic tire, produced using the rubber composition.

ADVANTAGEOUS EFFECTS OF INVENTION

According to the present invention, the masterbatch contains a modified natural rubber with a phosphorus content of 200 ppm or less; and microfibrillated plant fibers. Thus, a rubber composition prepared using the masterbatch can contain microfibrillated plant fibers uniformly dispersed therein. Further, the use of the rubber composition for a tire component, such as a sidewall, enables to provide a pneumatic tire that has improved properties in term of handling stability, ride comfort, and rolling resistance in a balanced manner.

BRIEF DESCRIPTION OF THE DRAWINGS

Fig. 1 is a schematic view showing the primary form of microfibrillated plant fibers.
Fig. 2 is a schematic view showing the secondary form of microfibrillated plant fibers.

DESCRIPTION OF EMBODIMENTS

(Masterbatch)

The masterbatch of the present invention contains a modified natural rubber with a phosphorus content of 200 ppm or less, and microfibrillated plant fibers. Conventionally, it is possible to disperse microfibrillated plant fibers in a masterbatch; however, disadvantageously, in the case of adding the masterbatch to a rubber composition, it is difficult to uniformly disperse the fibers in the rubber composition. The masterbatch of the present invention can solve this problem by using a modified natural rubber with a phosphorus content of 200 ppm or less. The modified natural rubber is free from honeycomb cells made of proteins and phospholipids, which characteristically exist in natural rubber. Thus, the modified natural rubber tends to incorporate filler easily, and to be highly compatible with other polymers. For this reason, combination use of microfibrillated plant fibers and the modified natural rubber leads to the preparation of a masterbatch that enables microfibrillated plant fibers to be uniformly dispersed in a rubber composition.

The modified natural rubber (HPNR: highly purified natural rubber) has a phosphorus content of 200 ppm or less. If the phosphorus content exceeds 200 ppm, the gel content in rubber increases during storage, resulting in an increase in the tan$\delta$ of the rubber vulcanizate and therefore poor fuel economy. In addition, the Mooney viscosity of the unvulcanized rubber composition is increased, resulting in poor processability. The phosphorus content is 200 ppm or less, and is preferably 120 ppm or less. The phosphorus content herein can be determined by any conventional method such as ICP optical emission spectrometry. The phosphorus is derived from phospholipids (phosphorus compounds).

The modified natural rubber preferably has a nitrogen content of 0.3% by mass or less, and more preferably 0.15% by mass or less. If the nitrogen content exceeds 0.3% by mass, the Mooney viscosity is likely to increase during storage, resulting in poor processability. In addition, the fuel economy may be poor. The nitrogen content can be determined by any conventional method such as Kjeldahl method. The nitrogen is derived from proteins.

The modified natural rubber preferably has a gel content of 20% by mass or less, more preferably 10% by mass or less, and further preferably 7% by mass or less. If the gel content exceeds 20% by mass, the Mooney viscosity is likely to increase, resulting in poor processability. In addition, the fuel economy may be poor. The gel content herein means a value determined as the amount of matter insoluble in toluene, which is a nonpolar solvent, and this is also referred to simply as "gel content" or "gel fraction" hereinafter. The content of a gel fraction is measured as follows. First, a natural rubber sample is immersed in dry toluene and left in a dark, light-shielded place for one week. Then, the toluene solution is centrifuged at $1.3 \times 10^5$ rpm for 30 minutes, so that an insoluble gel fraction and a toluene-soluble fraction are separated. The insoluble gel fraction is mixed with methanol to be solidified, and is then dried. Finally, the gel content can be determined based on the ratio of the mass of the dried gel fraction to the original mass of the sample.

Preferably, the modified natural rubber is substantially free from phospholipids. The phrase "substantially free from phospholipids" herein means that a natural rubber sample shows no peak ascribed to phospholipids between -3 ppm and 1 ppm in the $^{31}$P NMR measurement of an extract prepared by chloroform extraction from the sample. The phosphorus peak between -3 ppm and 1 ppm is a peak ascribed to the phosphate structure of the "phospho" of phospholipids.

Examples of the microfibrillated plant fibers (cellulose nanofibers) include those derived from natural products such as wood, bamboo, linen, jute, kenaf, crop wastes, cloth, regenerated pulp, wastepaper, bacterial cellulose, and ascidian cellulose. The microfibrillated plant fibers may be produced by any method. Examples of the method include methods in which any of the above natural products is chemically treated with a chemical such as sodium hydroxide, and then the treated product is mechanically ground or beaten using a machine such as a refiner, twin-screw kneader (twin-screw extruder), twin-screw kneading extruder, high-pressure homogenizer, media agitating mill, stone mill, grinder, vibrating mill, and sand grinder.

In the masterbatch of the present invention, the microfibrillated plant fibers are preferably present in an amount of 5 parts by mass or more, and more preferably 10 parts by mass or more, per 100 parts by mass of the modified natural rubber. If the amount is less than 5 parts by mass, too much modified natural rubber may be present in a rubber composition containing the masterbatch in order to ensure the desired content of microfibrillated plant fibers in the rubber composition. In this case, the crosslink density may be low and the fuel economy may be poor. The microfibrillated plant fibers are also preferably present in an amount of 30 parts by mass or less, and more preferably 26 parts by mass or less, per 100 parts by mass of the modified natural rubber. If the amount exceeds 30 parts by mass, the masterbatch may be excessively harder than other rubber materials such as TSR, BR and SBR, so that the masterbatch may be less easily mixed with the other rubber materials, thereby resulting in low dispersibility of microfibrillated plant fibers, poor elongation at break, and poor fuel economy.

The masterbatch of the present invention can be produced, for example, by a method including: a step (I) of coagulating a mixture of a saponified natural rubber latex and microfibrillated plant fibers; and a step (II) of washing the coagulum obtained in the step (I) to adjust the phosphorus content in rubber to 200 ppm or less. More specifically, a composite containing a modified natural rubber (HPNR) with a phosphorus content of 200 ppm or less can be produced as follows: first, a natural rubber latex subjected to saponification treatment with an alkali such as NaOH (saponified natural rubber latex) is prepared; microfibrillated plant fibers are introduced into the saponified natural rubber latex, and the mixture is stirred to prepare a compounded latex (liquid mixture); the compounded latex is coagulated and then the liquid phase is discarded; and the obtained coagulum is washed so that the phosphorus content in natural rubber is reduced. Thus, a composite containing microfibrillated plant fibers uniformly dispersed in HPNR can be produced. In this method, the microfibrillated plant fibers are introduced after the saponification treatment. Accordingly, the alkalinity is weakened so that the damage on the microfibrillated plant fibers can be suppressed. It should be noted that after the microfibrillated plant fibers are introduced, the next operations, that is, stirring and coagulating, are preferably started in a short time.

(Step (I))

Natural rubber latex is collected as sap of natural rubber trees such as Hevea, and it contains water, proteins, lipids, inorganic salts and the like, in addition to a rubber fraction. A gel fraction in rubber is thought to be attributed to a complex of various impurities in rubber. In the present invention, examples of usable natural rubber latexes include raw latex (field latex) taken from hevea trees by tapping the trees, and concentrated latex obtained by centrifugation or creaming (e.g., purified latex, high-ammonia latex containing ammonia mixed by a usual method, LATZ latex stabilized using zinc oxide, TMTD and ammonia).

Natural rubber latex can be saponified by mixing natural rubber latex with an alkali such as NaOH and optionally a surfactant, and leaving the mixture at rest at a predetermined temperature for a certain period. Operations such as stirring may be performed, if necessary. As natural rubber latex is subjected to saponification treatment as mentioned above, the particles of natural rubber are uniformly treated, which contributes to efficient saponification. After the saponification treatment is performed, phosphorus compounds separated in the saponification treatment are washed off in the below-described step (II). Thus, the phosphorus content in the natural rubber contained in a masterbatch to be prepared is reduced. Further, the saponification treatment causes decomposition of proteins in natural rubber. Thus, the nitrogen content in the natural rubber is also reduced.

The alkali used in the saponification treatment is preferably sodium hydroxide, potassium hydroxide, or the like. The surfactant is not particularly limited, and examples thereof include known nonionic surfactants, anionic surfactants and amphoteric surfactants, such as polyoxyethylene alkyl ether sulfate salts. Polyoxyethylene alkyl ether sulfate salts are suitable from the viewpoint of satisfactory saponification of rubber without coagulation. In the saponification treatment, the amounts of the alkali and surfactant, and the temperature and time of the saponification treatment can be set as appropriate.

In the step (I), the microfibrillated plant fibers may be introduced, into the saponified natural rubber latex, as an aqueous solution in which the fibers are dispersed in water (aqueous solution of microfibrillated plant fibers), or they may be introduced as they are into the saponified natural rubber latex, and then the mixture is optionally diluted with water. It is preferable to introduce the aqueous solution of microfibrillated plant fibers into the saponified natural rubber latex from the viewpoint of good dispersion of the microfibrillated plant fibers. In the aqueous solution of microfibrillated plant fibers, the amount of the microfibrillated plant fibers (solids content) is preferably 0.1 to 40% by mass, more preferably 2 to 40% by mass, and further preferably 5 to 30% by mass.

The microfibrillated plant fibers in a primary form preferably have an average fiber diameter (number average fiber diameter) of 4 nm or greater, more preferably 30 nm or greater, and further preferably 50 nm or greater. If the average fiber diameter is smaller than 4 nm, the effect of enhancing the complex modulus E* is less likely to be exhibited. The average fiber diameter of the microfibrillated plant fibers in a primary form is also preferably 10 $\mu$m or smaller, more

preferably 500 nm or smaller, and further preferably 100 nm or smaller. If the average fiber diameter exceeds 10 μm, the microfibrillated plant fibers are less likely to disperse and the microfibrillated plant fibers tend to be damaged easily during the process.

The microfibrillated plant fibers in a secondary form preferably have an average fiber diameter (number average fiber diameter) of 15 μm or greater, more preferably 30 μm or greater, and further preferably 40 μm or greater. If the average fiber diameter is smaller than 15 μm, the effect of enhancing the complex modulus E* is less likely to be exhibited. The average fiber diameter of the microfibrillated plant fibers in a secondary form is also preferably 100 μm or smaller, more preferably 90 μm or smaller, and further preferably 80 μm or smaller. If the average fiber diameter exceeds 100 μm, the microfibrillated plant fibers are less likely to disperse and the microfibrillated plant fibers tend to be damaged easily during the process.

The microfibrillated plant fibers in a primary form preferably have an average fiber length (number average fiber length) of 100 nm or longer, more preferably 200 nm or longer, further preferably 300 nm or longer, still further preferably 1 μm or longer, particularly preferably 2 μm or longer, and most preferably 3 μm or longer. If the average fiber length is shorter than 100 nm, a large amount of fibers are disadvantageously required in order to affect the rubber physical properties. The average fiber length of the microfibrillated plant fibers in a primary form is also preferably 200 μm or shorter, more preferably 100 μm or shorter, and further preferably 50 μm or shorter. If the average fiber length exceeds 200 μm, only a small amount of fibers is enough to affect the rubber physical properties; however, strain tends to concentrate on the rubber matrix around fiber edges, thereby resulting in poor crack growth resistance and poor tensile strength.

The microfibrillated plant fibers in a secondary form preferably have an average fiber length (number average fiber length) of 10 μm or longer, more preferably 60 μm or longer, and further preferably 100 μm or longer. If the average fiber length is shorter than 10 μm, a large amount of fibers are disadvantageously required in order to affect the rubber physical properties. The average fiber length of the microfibrillated plant fibers in a secondary form is also preferably 300 μm or shorter, more preferably 250 μm or shorter, and further preferably 200 μm or shorter. If the average fiber length exceeds 300 μm, only a small amount of fibers is enough to affect the rubber physical properties; however, strain tends to concentrate on the rubber matrix around fiber edges, thereby resulting in poor crack growth resistance and poor tensile strength.

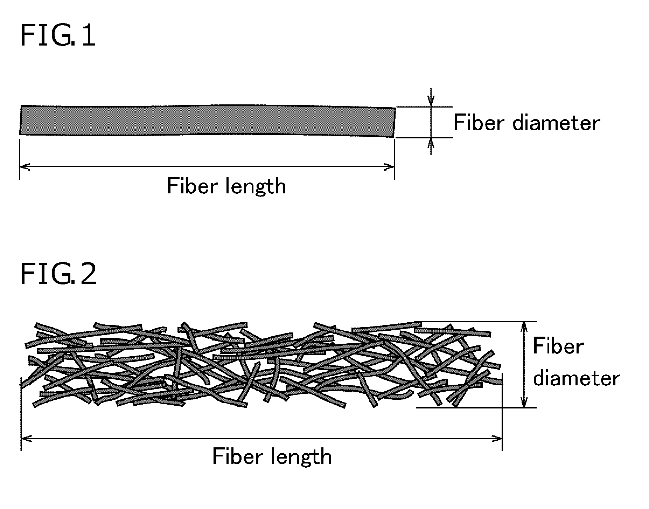

As shown in Fig. 1, the fiber diameter and the fiber length of the microfibrillated plant fibers in a primary form refer to the length of the short side and the length of the long side, respectively, of each fiber. Also, as shown in Fig. 2, the fiber diameter and the fiber length of the microfibrillated plant fibers in a secondary form refer to the length of the short side and the length of the long side, respectively, of each aggregate of fibers. The fiber diameter and fiber length of the microfibrillated plant fibers in a primary form can be measured by SEM observation of a fiber sample prepared by stirring the microfibrillated plant fibers in water, leaving them at rest for about one minute, and drying the resulting supernatant on a plate. The fiber diameter and fiber length of the secondary form can be measured by SEM observation of a fiber sample prepared by stirring the microfibrillated plant fibers in water, collecting a suspended portion of the resulting suspension before sedimentation, and drying it on a plate. For both the primary form and the secondary form, values are measured before mixing the fibers with rubber latex.

The average fiber diameter and the average fiber length of the microfibrillated plant fibers can be adjusted by varying the rate and time of stirring of an aqueous solution containing the microfibrillated plant fibers, the shape of a stirring blade of a stirrer, and the like. A rapider stirring rate provides thinner and shorter fibers, whereas a slower stirring rate provides thicker and longer fibers.

In order to efficiently enhance the complex modulus E* by the microfibrillated plant fibers and to prevent crack fracture initiation and occurrence of visually observable undesirable matter in a rubber composition to be finally obtained, it is required to bring fibers with appropriate fiber lengths (100 nm to 300 μm (preferably 1 to 300 μm)) close to each other to allow the fibers to interact with each other. From this viewpoint, the cumulative number frequency of the microfibrillated plant fibers with fiber lengths of 100 nm to 300 μm is preferably 70% or higher, more preferably 80% or higher, and further preferably 90% or higher, of the total amount of the fibers (= 100%). Also, the cumulative number frequency of the microfibrillated plant fibers with fiber lengths of 1 to 300 μm is preferably 70% or higher, more preferably 80% or higher, and further preferably 90% or higher, of the total amount of the fibers (= 100%).

The cumulative number frequency is calculated on the basis of the distributions of fiber diameters and fiber lengths determined by manually measuring the microfibrillated plant fibers from point to point (from edge to edge) on an SEM image. It is appropriate that n (number of samples) ≥ 100.

The mixture of the saponified natural rubber latex and the microfibrillated plant fibers can be prepared by mixing them by any known method.

Examples of the method for coagulating the mixture include acid coagulation, salt coagulation, and methanol coagulation. Preferred are acid coagulation, salt coagulation, and combination thereof in order to coagulate the mixture so that the microfibrillated plant fibers are uniformly dispersed in the masterbatch. Examples of usable acids for coagulation include formic acid, sulfuric acid, hydrochloric acid, and acetic acid. Examples of usable salts include monovalent to trivalent metal salts (e.g. sodium chloride, magnesium chloride, calcium salts such as calcium nitrate and calcium chloride). The coagulation of the mixture is preferably performed by adding an acid or a salt to adjust the pH of the mixture to 4 to 9 (preferably 6 to 8, more preferably 6.5 to 7.5) so that the solids are coagulated. In the examples of the present application mentioned below, coagulation is performed with sulfuric acid.

(Step (II))

In the step (II), the coagulum (agglomerate containing agglomerated rubber and microfibrillated plant fibers) obtained in the step (I) is washed to adjust (reduce) the phosphorus content in rubber (natural rubber) to 200 ppm or less. Washing treatment after the saponification treatment enables to reduce the phosphorus content in the natural rubber of the coagulum to 200 ppm or less so that honeycomb cells made of proteins and phospholipids, which characteristically exist in natural rubber, can be removed.

Examples of the washing method include a method of diluting the rubber fraction with water and then centrifuging it; and a method of diluting the rubber fraction with water, leaving the mixture at rest to allow the rubber to float or sediment, and then removing only the water phase. Before the centrifugation, dilution with water may first be performed so that the rubber fraction of the natural rubber latex accounts for 5 to 40% by mass, and preferably 10 to 30% by mass, and then the dilution may be centrifuged at 5000 to 10000 rpm for 1 to 60 minutes. This washing may be repeated until the phosphorus content reaches a desired value. Also in the case of leaving the mixture at rest to allow the rubber to float or sediment, washing treatment may be carried out by repeating addition of water and stirring of the mixture until a desired phosphorus content is reached.

The washing method is not limited to these methods. Washing treatment may be carried out by neutralization with weakly alkaline water, such as sodium carbonate, so that the pH falls to 6 to 7, followed by removing the liquid phase.

After the washing treatment, the rubber is usually dried by any known method (e.g. oven, vacuum). In the examples of the present application mentioned below, the rubber was dried at 40°C for 12 hours in vacuum. After the drying, the rubber is kneaded using a two-roll mill, a Bunbury mixer, or the like to give a masterbatch crumb containing a modified natural rubber with a phosphorus content of 200 ppm or less (highly purified natural rubber) and microfibrillated plant fibers. The masterbatch is preferably formed into a sheet with a thickness of a few centimeters using a rolling mill for good cohesiveness and handleability. The masterbatch may contain other components to the extent that they do not inhibit the effects of the present invention.

(Rubber composition)

The rubber composition of the present invention contains the aforementioned masterbatch. Owing to the effects of the modified natural rubber in the masterbatch, a rubber composition containing microfibrillated plant fibers uniformly dispersed therein is obtained.

The microfibrillated plant fibers are oriented in an extrusion direction (in tire components including a tread, base tread, sidewall, clinch, tie gum, and bead apex, this direction corresponds to the tire circumferential direction, that is, the rotation direction). Thus, the fibers mainly reinforce the rubber composition in the extrusion direction, and they only slightly contribute to reinforcement in a direction (tire radial direction) perpendicular to the extrusion direction. This characteristics make it possible to increase the complex modulus $E^*$ in the tire circumferential direction while maintaining the complex modulus $E^*$ in the tire radial direction. As a result, the handling stability, fuel economy, and ride comfort are all ensured. The reason of this is described hereinbelow.

The complex modulus $E^*$ in the tire circumferential direction is associated with a torsion torque generated when a certain slip angle is applied to the tire so that a torsional deformation is created. Thus, a higher complex modulus $E^*$ in the tire circumferential direction leads to better steering response. On the other hand, the complex modulus $E^*$ in the tire radial direction is associated with the rolling resistance in straight-ahead rolling, and the rebound force to an input given when the tire runs over irregularities. Thus, a lower complex modulus $E^*$ in the tire radial direction leads to better fuel economy and better ride comfort. In the rubber composition of the present invention, the microfibrillated plant fibers enable to increase the complex modulus $E^*$ in the tire circumferential direction while maintaining the complex modulus $E^*$ in the tire radial direction. Therefore, the rubber composition can simultaneously provide good handling stability, fuel economy, and ride comfort.

In the rubber composition of the present invention, the modified natural rubber is preferably present in an amount of 5% by mass or more, more preferably 10% by mass or more, and further preferably 15% by mass or more, based on 100% by mass of the rubber component. If the amount of the modified natural rubber is less than 5% by mass, the dispersibility of microfibrillated plant fibers may not be sufficiently enhanced. The amount of the modified natural rubber is also preferably 80% by mass or less, more preferably 60% by mass or less, and further preferably 50% by mass or less, based on 100% by mass of the rubber component. If the amount exceeds 80% by mass, the elongation at break and fuel economy tend to be poor.

The rubber component in the rubber composition of the present invention may contain other rubber materials in addition to the modified natural rubber. Examples of other rubber materials include diene rubbers such as natural rubber (NR), isoprene rubber (IR), epoxidized natural rubber (ENR), butadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Preferred among these are NR, IR, and BR.

In the case that the rubber composition of the present invention contains NR, the amount of NR is preferably 5% by mass or more, and more preferably 15% by mass or more, based on 100% by mass of the rubber component. If the amount is less than 5% by mass, the elongation at break may be insufficient. The amount of NR is also preferably 80% by mass or less, and more preferably 60% by mass or less, based on 100% by mass of the rubber component. If the amount exceeds 80% by mass, the crack growth resistance and reversion resistance may be reduced.

In the case that the rubber composition of the present invention contains IR, the amount of IR is preferably 3% by mass or more, and more preferably 8% by mass or more, based on 100% by mass of the rubber component. If the amount is less than 3% by mass, the effect of enhancing the processability is unlikely to be achieved. The amount of IR is also preferably 40% by mass or less, and more preferably 20% by mass or less, based on 100% by mass of the rubber component. If the amount exceeds 40% by mass, the complex modulus $E^*$ and elongation at break tend to be reduced.

In the case that the rubber composition of the present invention contains BR, the amount of BR is preferably 5% by mass or more, and more preferably 15% by mass or more, based on 100% by mass of the rubber component. If the amount is less than 5% by mass, the crack growth resistance and reversion resistance may be poor. The amount of BR is also preferably 80% by mass or less, and more preferably 60% by mass or less, based on 100% by mass of the rubber component. If the amount exceeds 80% by mass, the elongation at break may be insufficient.

In the rubber composition of the present invention, the microfibrillated plant fibers are preferably present in an amount of 1 part by mass or more, more preferably 2 parts by mass or more, and further preferably 3 parts by mass or more, per 100 parts by mass of the rubber component in the rubber composition. If the amount is less than 1 part by mass, the microfibrillated plant fibers are less likely to interact with each other, and thus a high complex modulus $E^*$ may not be achieved. The microfibrillated plant fibers are also preferably present in an amount of 10 parts by mass or less, and more preferably 8 parts by mass or less, per 100 parts by mass of the rubber component in the rubber composition. If the amount exceeds 10 parts by mass, the microfibrillated plant fibers may be difficult to disperse, and thus the elongation at break and fuel economy may be poor.

The rubber composition of the present invention may preferably contain carbon black and/or silica. They can each reinforce the rubber composition appropriately in the tire radial direction (the direction perpendicular to the extrusion direction) and improve the fuel economy, ride comfort, and handling stability in a balanced manner. Carbon black and/or silica can further provide excellent elongation at break, breaking resistance, and crack growth resistance. Furthermore, in the case of the rubber composition for a tread or a clinch, they can each provide appropriate abrasion resistance.

The nitrogen adsorption specific surface area ($N_2SA$) of carbon black is preferably 25 $m^2$/g or larger, and more preferably 28 $m^2$/g or larger. If the $N_2SA$ is smaller than 25 $m^2$/g, the elongation at break may be insufficient. The $N_2SA$ is also preferably 190 $m^2$/g or smaller, and more preferably 100 $m^2$/g or smaller. If the $N_2SA$ is larger than 190 $m^2$/g, the fuel economy may be insufficient.

The $N_2SA$ of carbon black can be determined in conformity with JIS K 6217-2: 2001.

The nitrogen adsorption specific surface area ($N_2SA$) of silica is preferably 70 $m^2$/g or larger, and more preferably 100 $m^2$/g or larger. If the $N_2SA$ is smaller than 70 $m^2$/g, the elongation at break may be insufficient. The $N_2SA$ is also preferably 300 $m^2$/g or smaller, and more preferably 250 $m^2$/g or smaller. If the $N_2SA$ is larger than 300 $m^2$/g, the fuel economy may be insufficient.

The $N_2SA$ of silica can be determined by the BET method in conformity with ASTM D 3037-93.

The amount of carbon black is preferably 10 parts by mass or more, and more preferably 40 parts by mass or more, per 100 parts by mass of the rubber component in the rubber composition. The amount of carbon black is also preferably 80 parts by mass or less, and more preferably 70 parts by mass or less. If the amount is in the above range, good fuel economy, handling stability, and elongation at break can be achieved while the ride comfort is maintained.

The amount of silica is preferably 3 parts by mass or more, and more preferably 5 parts by mass or more, per 100 parts by mass of the rubber component in the rubber composition. The amount of silica is also preferably 20 parts by mass or less, and more preferably 10 parts by mass or less. If the amount is in the above range, good fuel economy and elongation at break can be achieved. In addition, the rubber composition is less likely to shrink, and thus the resulting extrudate has good size stability.

It should be noted that since, in comparison with carbon black, silica has a smaller effect in enhancing the abrasion resistance and complex modulus $E^*$, and it also requires a silane coupling agent and thus the cost increases, silica may not be added.

Except the case that the rubber composition is for use in a tread, the rubber composition preferably has a total content of carbon black and silica of 25 parts by mass or more, and more preferably 45 parts by mass or more, per 100 parts by mass of the rubber component in the rubber composition. The total content is also preferably 80 parts by mass or less, and more preferably 70 parts by mass or less. If the total content is in the above range, good fuel economy, ride comfort, handling stability, and elongation at break can be achieved.

In the case of the rubber composition for a tread, the rubber composition preferably has a total content of carbon black and silica of 40 to 120 parts by mass, and more preferably 50 to 110 parts by mass, per 100 parts by mass of the rubber component in the rubber composition, from the viewpoint of achieving good abrasion resistance and handling stability, which are important properties in this case.

The rubber composition of the present invention may preferably contain a C5 petroleum resin. In this case, good handling stability can be achieved. Examples of the C5 petroleum resin include aliphatic petroleum resins produced mainly from olefins and diolefins in the C5 fraction obtained by naphtha cracking.

The softening point of C5 petroleum resin is preferably 50°C or higher, and more preferably 80°C or higher. The softening point is also preferably 150°C or lower, and more preferably 120°C or lower. If the softening point is in the above range, good adhesion and elongation at break can be achieved.

The amount of C5 petroleum resin is preferably 0.5 parts by mass or more, and more preferably 1.5 parts by mass or more, per 100 parts by mass of the rubber component in the rubber composition. The amount is also preferably 5 parts by mass or less, and more preferably 3 parts by mass or less. If the amount is in the above range, good adhesion and elongation at break can be achieved.

In addition to the above components, the rubber composition of the present invention may appropriately contain other compounding ingredients conventionally used in the rubber industry, such as oil, zinc oxide, stearic acid, antioxidants, sulfur, and vulcanization accelerators.

The rubber composition of the present invention preferably has a ratio (E*a/E*b) of a complex modulus E*a in an extrusion direction (tire circumferential direction) to a complex modulus E*b in a direction perpendicular to the extrusion direction (tire radial direction) of 1.2 to 4.0, when the complex moduli E*a and E*b are measured at a temperature of 70°C and a dynamic strain of 2%. If the ratio E*a/E*b is adjusted in the above range, good fuel economy, handling stability, and ride comfort can be achieved in a balanced manner. The ratio E*a/E*b is more preferably adjusted in the range of 1.3 to 3.0.

The "tire circumferential direction" and the "tire radial direction" herein mean the directions specifically shown in, for example, Fig. 1 of JP 2009-202865 A.

The complex moduli E*a and E*b herein are determined by the method mentioned in the following examples.

The ratio E*a/E*b can be adjusted by varying the amount of microfibrillated plant fibers, the flexibility of microfibrillated plant fibers, the degree of tangling of microfibrillated plant fibers, the primary form of microfibrillated plant fibers, the pressure for extruding the unvulcanized rubber composition, and the like.

More specifically, the ratio E*a/E*b increases as the microfibrillated plant fibers are oriented in the tire circumferential direction at more even intervals, and as a larger amount of microfibrillated plant fibers is used.

The ratio E*a/E*b can also be increased by the use of SPB (1,2-syndiotactic polybutadiene crystal)-containing BR such as VCR 617 (UBE INDUSTRIES, LTD.); however, microfibrillated plant fibers have an advantage over the SPB-containing BR in that the fibers have a larger effect in increasing the ratio E*a/E*b.

The rubber composition of the present invention may be produced by a known method. For example, the components are mixed and kneaded using a rubber kneading device such as an open roll mill or a Bunbury mixer, and then the mixture is vulcanized to produce a rubber composition.

The rubber composition of the present invention can be used for tire components, and in particular it can be suitably used for sidewalls; clinches; base treads; tie gums; bead apexes; and treads for high performance tires.

A base tread is an innerlayer part of a multilayer tread, or an inner layer of a two-layer tread (tread having an outer surface layer (cap tread) and an inner surface layer (base tread)).

A clinch is a component arranged at the inner edge of a sidewall; specifically, for example, mention may be made of components shown in Fig. 1 of JP 2008-75066 A, Fig. 1 of JP 2004-106796 A, and the like.

A tie gum is a component arranged on the inner side of a carcass cord and on the outer side of an inner liner; specifically, mention may be made of components shown in, for example, Fig. 1 of JP 2010-095705 A.

A bead apex is a component arranged on the inner side of a tire clinch and extending radially outwardly from a bead core; specifically, mention may be made of components shown in, for example, Figs. 1 to 3 of JP 2008-38140 A.

A tread for high performance tires is a component used as a tire tread for a vehicle such as, for example, motorcycles, and passenger vehicles with high displacement of 2000 cc or higher.

The pneumatic tire of the present invention can be produced by a usual method using the rubber composition. Specifically, for example, the rubber composition before vulcanization is extruded and processed into the shape of a tire component such as a sidewall, and the resulting product is arranged in a tire building machine by a usual method, and then assembled with other tire components to form an unvulcanized tire. This unvulcanized tire is heat pressurized in a vulcanizer, whereby a tire is produced.

EXAMPLES

The present invention will be specifically described hereinbelow referring to, but not limited to, examples.

The chemicals used in the examples are listed below.

Natural rubber latex: field latex available from Muhibbah LATEKS Sdn. Bhd.

BR latex: prepared by the following method

SBR latex: prepared by the following method

Microfibrillated plant fibers: NEOFIBER (OJI SEITAI KAISHA, LTD.)

Surfactant: Emal-E (sodium polyoxyethylene lauryl ether sulfate) (KAO Corp.)

NaOH: NaOH (Wako Pure Chemical Industries, Ltd.)

Flocculant: POIZ C-60H (methacrylic acid ester polymer) (KAO Corp.)

Coagulant: 1% sulfuric acid (Wako Pure Chemical Industries, Ltd.)

NR: TSR20

IR: IR2200

BR 1: BR150B (UBE INDUSTRIES, LTD.)

BR 2: VCR617 (SPB-containing BR) (UBE INDUSTRIES, LTD.)

Carbon black 1: SHOBLACK N660 ($N_2SA$: 30 $m^2/g$) (Cabot Japan K.K.)

Carbon black 2: SHOBLACK N550 ($N_2SA$: 40 $m^2/g$) (Cabot Japan K.K.)

Silica: Ultrasil VN3 ($N_2SA$: 175 $m^2/g$) (Degussa)

Calcium carbonate: Calcium carbonate 200 (TAKEHARA KAGAKU KOGYO CO., LTD.)

C5 petroleum resin: Marukarez T-100AS (C5 petroleum resin: aliphatic petroleum resin produced mainly from olefins and diolefins in the C5 fraction obtained by naphtha cracking; softening point: 102°C) (Maruzen Petrochemical Co., Ltd.)

Oil: VIVATEC 500 (H&R)

Zinc oxide: Ginrei R (Toho Zinc Co., Ltd.)

Antioxidant (6PPD): ANTIGENE 6C (N-phenyl-N'-(1,3-dimethylbutyl)-p-phenylenediamine) (Sumitomo Chemical Co., Ltd.)

10% Oil-containing insoluble sulfur: SEIMI sulfur (content of matter insoluble in carbon disulfide: 60%, oil content: 10%) (Nippon Kanryu Industry Co., Ltd.)

Vulcanization accelerator (TBBS): NOCCELER NS (N-tert-butyl-2-benzothiazolylsulphenamide) (Ouchi Shinko Chemical Industrial Co., Ltd.)

(Preparation of aqueous solution of microfibrillated plant fibers)

Microfibrillated plant fibers were diluted with water in an amount 200 times as much as the fibers (in mass ratio) and the dilution was stirred using a propeller homogenizer to prepare an aqueous solution of microfibrillated plant fibers. In this preparation, the stirring rate and the stirring time were varied to adjust the average fiber diameter and the average fiber length of the microfibrillated plant fibers.

(Preparation of masterbatch)

The concentration of solids (DRC) in natural rubber latex was adjusted to 30% (w/v). Then, Emal-E (10 g) and NaOH (20 g) were added to the natural rubber latex (1000 g), and the mixture was saponified for 48 hours at room temperature. Thus, a saponified natural rubber latex was obtained.

Next, the saponified natural rubber latex and the aqueous solution of microfibrillated plant fibers were weighed and compounded so that the mass ratio therebetween after drying was a predetermined value, and the mixture was stirred for 2 hours at 450 rpm using a propeller homogenizer.

Then, a flocculant (1.5 g) was added to the stirred mixture (1000 g), and the resulting mixture was stirred for 2 minutes at 300 rpm using the propeller homogenizer.

Then, a coagulant was added to the mixture under stirring at 450 rpm and at 40°C to 45°C using the propeller homogenizer, so that the pH was adjusted to 6.8 to 7.1 to give a coagulum. The stirring time was 1 hour. The obtained coagulum was repeatedly washed with water (1000 ml).

Then, the coagulum was air-dried for several hours and further vacuum-dried for 12 hours at 40°C to give a masterbatch (MB). Table 2 shows the information of the obtained MB (1) to MB (12). Here, MB (4) was prepared without saponification treatment. MB (5) was prepared using BR latex instead of natural rubber latex, and MB (6) was prepared using SBR latex instead of natural rubber latex.

The SBR latex and BR latex were prepared by the following methods. The chemicals used are listed below.

Water: distilled water

Emulsifier (1): rosin acid soap (Harima Chemicals, Inc.)

Emulsifier (2): fatty acid soap (Wako Pure Chemical Industries, Ltd.)
Electrolyte: sodium phosphate (Wako Pure Chemical Industries, Ltd.)
Styrene: styrene (Wako Pure Chemical Industries, Ltd.)
Butadiene: 1,3-butadiene (Takachiho Chemical Industrial Co., Ltd.)
Molecular weight regulator: tert-dodecyl mercaptan (Wako Pure Chemical Industries, Ltd.)
Radical initiator: paramenthane hydroperoxide (NOF Corp.)
SFS: sodium formaldehyde sulfoxylate (Wako Pure Chemical Industries, Ltd.)
EDTA: sodium ethylenediaminetetraacetate (Wako Pure Chemical Industries, Ltd.)
Catalyst: ferric sulfate (Wako Pure Chemical Industries, Ltd.)
Polymerization terminator: N,N'-dimethyldithiocarbamate (Wako Pure Chemical Industries, Ltd.)

(Preparation of SBR latex)

According to the composition shown in Table 1, a pressure-resistant reactor equipped with a stirrer was charged with the water, emulsifier (1), emulsifier (2), electrolyte, styrene, butadiene, and molecular weight regulator. The reactor temperature was set to 5°C. An aqueous solution containing the radical initiator and SFS dissolved therein and an aqueous solution containing the EDTA and catalyst dissolved therein were put into the reactor to initiate polymerization. Five hours after the initiation of polymerization, the polymerization terminator was added to stop the reaction. Thus, SBR latex was obtained.

(Preparation of BR latex)

According to the composition shown in Table 1, BR latex was obtained in the same manner as for the SBR latex.

[Table 1]

| | | SBR latex | BR latex |
|---|---|---|---|
| Amount (parts by mass) | Water | 200 | 200 |
| | Emulsifier (1) | 4.5 | 4.5 |
| | Emulsifier (2) | 0.15 | 0.15 |
| | Electrolyte | 0.8 | 0.8 |
| | Styrene | 25 | – |
| | Butadiene | 75 | 100 |
| | Molecular weight regulator | 0.2 | 0.2 |
| | Radical initiator | 0.1 | 0.1 |
| | SFS | 0.15 | 0.15 |
| | EDTA | 0.07 | 0.07 |
| | Catalyst | 0.05 | 0.05 |
| | Polymerization terminator | 0.2 | 0.2 |

With respect to the rubber fractions in MB (1) to MB (12) and TSR20, the nitrogen content, phosphorus content, and gel content were measured by the following methods. Table 2 shows the results.

(Measurement of nitrogen content)

The nitrogen content was determined by gas chromatography after pyrolysis.

(Measurement of phosphorus content)

The phosphorus content was determined using an ICP optical emission spectrometer (P-4010, Hitachi, Ltd.). Further, $^{31}$P-NMR measurement of phosphorus was performed using an NMR analyzer (400 MHz, AV400M, Bruker Japan Co., Ltd.). In the measurement, the measured peak of the P atoms in an 80% phosphoric acid aqueous solution was used as a reference point (0 ppm); and an extract prepared by chloroform extraction from raw rubber was purified, and then the purified product was dissolved in $CDCl_3$ for the measurement.

(Measurement of gel content)

Raw rubber was cut to a size of 1 mm x 1 mm to prepare a sample, and 70.00 mg of the sample was weighed. Toluene (35 mL) was added thereto, and the mixture was left at rest in a cool, dark place for 1 week. Next, the mixture was centrifuged so that a gel fraction that was insoluble in toluene was sedimented, and a toluene-soluble supernatant was removed. Then, only the gel fraction was solidified with methanol and then dried, and the mass of the dried gel fraction was measured. The gel content (% by mass) was determined by the following equation.

```
Gel content (% by mass) = [mass after drying
(mg)/initial mass of sample (mg)] × 100
```

[Table 2]

| | Microfibrillated plant fibers | | | | | | | Rubber | | | |
|---|---|---|---|---|---|---|---|---|---|---|---|
| | Average fiber diameter | | Average fiber length | | Cumulative number frequency (%) of fibers | | Amount of fibers (% by mass) | Rubber species | Nitrogen content (% by mass) | Phosphorus content (ppm) | Gel content (% by mass) |
| | Primary form | Secondary form | Primary form | Secondary form | Fiber lengths of 1 to 300 $\mu$m | Fiber lengths of 100 nm to 300 $\mu$m | | | | | |
| MB (1) | 70nm | 64 $\mu$m | 5 $\mu$m | 168 $\mu$m | 95 | 99 | 10 | HPNR | 0.10 | 98 | 6.8 |
| MB (2) | 70nm | 55 $\mu$m | 5 $\mu$m | 150 $\mu$m | 96 | 99 | 5 | HPNR | 0.098 | 110 | 5.8 |
| MB (3) | 70nm | 74 $\mu$m | 5 $\mu$m | 198 $\mu$m | 94 | 99 | 20 | HPNR | 0.092 | 85 | 7.5 |
| MB (4) | 70nm | 115 $\mu$m | 5 $\mu$m | 555 $\mu$m | 38 | 42 | 10 | NR | 0.35 | 415 | 31.2 |
| MB (5) | 70nm | 145 $\mu$m | 5 $\mu$m | 680 $\mu$m | 29 | 31 | 10 | BR | n/a | n/a | 11.2 |
| MB (6) | 70nm | 105 $\mu$m | 5 $\mu$m | 455 $\mu$m | 44 | 46 | 10 | SBR | n/a | n/a | 13.2 |
| MB (7) | 10nm | 31 $\mu$m | 1 $\mu$m | 105 $\mu$m | 82 | 93 | 10 | HPNR | 0.12 | 105 | 7.1 |
| MB (8) | 1 $\mu$m | 92 $\mu$m | 70 $\mu$m | 282 $\mu$m | 64 | 68 | 10 | HPNR | 0.11 | 95 | 5.5 |
| MB (9) | 3nm | 25 $\mu$m | 350nm | 85 $\mu$m | 99 | 100 | 10 | HPNR | 0.15 | 165 | 13.5 |
| MB (10) | 1.5 $\mu$m | 122 $\mu$m | 110 $\mu$m | 385 $\mu$m | 45 | 47 | 10 | HPNR | 0.096 | 99 | 5.4 |
| MB (11) | 70nm | 42 $\mu$m | 2 $\mu$m | 135 $\mu$m | 82 | 92 | 10 | HPNR | 0.099 | 109 | 5.9 |
| MB (12) | 70nm | 95 $\mu$m | 20 $\mu$m | 215 $\mu$m | 89 | 94 | 10 | HPNR | 0.12 | 105 | 6.1 |
| TSR20 | - | - | - | - | - | - | - | NR | 0.34 | 433 | 32 |

As shown in Table 2, MBs 1 to 3 and 7 to 12 each containing HPNR had reduced nitrogen, phosphorus, and gel contents in comparison with TSR20. Further, the $^{31}$P NMR measurement did not detect any peak ascribed to phospholipids between -3 ppm and 1 ppm.

(Examples and Comparative Examples)

According to each composition shown in the upper part of Table 3 or 4, chemicals other than the sulfur and vulcanization accelerator were kneaded using a 1.7-L Bunbury mixer (Kobe Steel, Ltd.). Then, the sulfur and vulcanization accelerator were added to the obtained kneaded mixture and kneaded using an open roll mill, and thus an unvulcanized rubber composition was obtained.
The obtained unvulcanized rubber composition was extruded and processed into the shape of a sidewall at an outlet temperature of 115°C. Then, a raw tire was produced, and the raw tire was vulcanized at 170°C to prepare a test tire (205/65R15). The obtained test tires were evaluated for their properties by the following tests.

(Viscoelasticity test)

A rectangular rubber specimen was cut out of the obtained test tire such that the long side of the specimen was along the circumferential direction about the tire axis. Thus, a rubber specimen 1 (size: 20 mm in length, 3 mm in width, and 2 mm in thickness) was obtained. Further, a rectangular rubber specimen was cut out such that the long side of the specimen was along the radial direction about the tire axis. Thus, a rubber specimen 2 (size: the same as that of the rubber specimen 1) was obtained.
With respect to the obtained rubber specimens 1 and 2, the complex modulus $E^*a$ (MPa) in the tire circumferential direction and the complex modulus $E^*b$ (MPa) in the tire radial direction were determined at a temperature of 70°C, a frequency of 10 Hz, an initial strain of 10%, and a dynamic strain of 2% (strain in the long-side direction) by using a viscoelastic spectrometer VES (Iwamoto Seisakusho Co., Ltd.). A greater $E^*$ value indicates higher rigidity.
Also, a greater $E^*a$ value indicates better steering response to a minute change in the steering angle, and better handling stability. A smaller $E^*b$ value indicates a higher ability to absorb the shock due to irregularities in the road surfaces, and better ride comfort. A greater ratio $E^*a/E^*b$ indicates a better transient characteristic (easier returning of a vehicle when the steering wheel is returned to the straight-ahead position immediately after cornering with a certain steering angle).
In addition, the tanδ of the rubber specimen 1 was measured by the above evaluation method. The tanδ of the specimen 1 in Comparative Example 1 was regarded as 100, and the tanδ of the specimen 1 of each composition was expressed as an index value. A greater index value of tanδ (70°C) indicates better fuel economy.

(Sheet processability)

The unvulcanized rubber compositions were extruded, and then shaped into a predetermined sidewall. The resulting shaped products were visually or tactually evaluated for the edge conditions, the degree of rubber scorch, the degree of adhesion between rubber products, the flatness, and the presence of agglomerates of microfibrillated plant fibers. The result of Comparative Example 1 was regarded as 100, and the result of each composition was expressed as an index value. A greater value indicates better sheet processability.
With respect to the edge conditions, the straightest and smoothest edges were evaluated as good. With respect to the degree of rubber scorch, the absence of irregularities due to cured bits on a 15-cm-square, 2-mm-thick sheet cut out of the shaped product was evaluated as good. With respect to the flatness, the sheet that was flat enough to adhere tightly to a flat plate was evaluated as good.

(Handling stability, Ride comfort)

All wheels of a vehicle (engine size: 3000 cc) were equipped with the test tires, and the vehicle was driven on a test course under the common driving conditions. The control stability (handling stability) upon steering and the ride comfort were sensory evaluated by a test driver. The results of Comparative Example 1 were each regarded as 100, and the results of each composition were expressed as index values. A greater index value of handling stability indicates better handling stability, and a greater index value of ride comfort indicates better ride comfort.
[Table 3]

| | | | Examples | | | | | | | | | | | | | | | | | |
|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 |
| Composition (parts by mass) | NR | | 42 | 42 | 42 | 22 | 42 | 42 | 42 | 42 | 42 | 51 | 33 | 24 | 44 | 28 | 20 | 33 | 33 | 33 |
| | IR | | — | — | — | — | 10 | — | — | — | — | — | — | — | — | — | — | — | — | — |
| | BR 1 | | 40 | 40 | 40 | 40 | 40 | 40 | 40 | 40 | 40 | 40 | 40 | 40 | 40 | 40 | 40 | 40 | 40 | 40 |
| | BR 2 | | — | — | — | — | — | — | — | — | — | — | — | — | — | — | — | — | — | — |
| | MB | No. | (1) | (11) | (12) | (2) | (3) | (7) | (8) | (9) | (10) | (1) | (1) | (1) | (3) | (3) | (3) | (1) | (1) | (1) |
| | | Amount | 20 | 20 | 20 | 40 | 10 | 20 | 20 | 20 | 20 | 10 | 30 | 40 | 20 | 40 | 50 | 30 | 30 | 30 |
| | | (Rubber content) | 18 | 18 | 18 | 38 | 8 | 18 | 18 | 18 | 18 | 9 | 27 | 36 | 16 | 32 | 40 | 27 | 27 | 27 |
| | | (Fiber content) | 2 | 2 | 2 | 2 | 2 | 2 | 2 | 2 | 2 | 1 | 3 | 4 | 4 | 8 | 10 | 3 | 3 | 3 |
| | Microfibrillated plant fibers | | — | — | — | — | — | — | — | — | — | — | — | — | — | — | — | — | — | — |
| | Carbon black 1 | | — | — | — | — | — | — | — | — | — | — | — | — | — | — | — | — | 70 | — |
| | Carbon black 2 | | 50 | 50 | 50 | 50 | 50 | 50 | 50 | 50 | 50 | 50 | 50 | 50 | 50 | 50 | 50 | 20 | — | 50 |
| | Silica | | — | — | — | — | — | — | — | — | — | — | — | — | — | — | — | 5 | — | — |
| | Calcium carbonate | | — | — | — | — | — | — | — | — | — | — | — | — | — | — | — | 20 | 20 | 20 |
| | C5 petroleum resin | | 2 | 2 | 2 | 2 | 2 | 2 | 2 | 2 | 2 | 2 | 2 | 2 | 2 | 2 | 2 | 2 | 2 | 2 |
| | Oil | | 8 | 8 | 8 | 8 | 8 | 8 | 8 | 8 | 8 | 8 | 8 | 8 | 8 | 8 | 8 | 2 | 16 | 8 |
| | Zinc oxide | | 4 | 4 | 4 | 4 | 4 | 4 | 4 | 4 | 4 | 4 | 4 | 4 | 4 | 4 | 4 | 4 | 4 | 4 |
| | Stearic acid | | 2 | 2 | 2 | 2 | 2 | 2 | 2 | 2 | 2 | 2 | 2 | 2 | 2 | 2 | 2 | 2 | 2 | 2 |
| | Antioxidant | | 3 | 3 | 3 | 3 | 3 | 3 | 3 | 3 | 3 | 3 | 3 | 3 | 3 | 3 | 3 | 3 | 3 | 3 |
| | 10% Oil-containing insoluble sulfur | | 2 | 2 | 2 | 2 | 2 | 2 | 2 | 2 | 2 | 2 | 2 | 2 | 2 | 2 | 2 | 2 | 2 | 2 |
| | Vulcanization accelerator | | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| Evaluation | E* in tire circumferential direction (E*a) (70°C) | | 5.55 | 4.85 | 7.25 | 5.78 | 5.32 | 4.27 | 7.78 | 4.65 | 6.55 | 4.59 | 6.69 | 7.79 | 7.62 | 11.8 | 13.2 | 4.35 | 8.88 | 6.83 |
| | E* in tire radial direction (E*b) (70°C) | | 3.58 | 3.59 | 3.82 | 3.59 | 3.62 | 3.50 | 3.85 | 3.50 | 3.74 | 3.67 | 3.68 | 3.99 | 4.03 | 4.35 | 4.57 | 2.35 | 4.80 | 3.77 |
| | Ratio E*a/E*b (target: 1.2 to 4.0) | | 1.55 | 1.35 | 1.90 | 1.61 | 1.47 | 1.22 | 2.02 | 1.33 | 1.75 | 1.25 | 1.82 | 1.95 | 1.89 | 2.71 | 2.89 | 1.85 | 1.85 | 1.81 |
| | tan δ (70°C) (target: ≤0.175) | | 0.165 | 0.159 | 0.167 | 0.159 | 0.170 | 0.155 | 0.169 | 0.167 | 0.170 | 0.172 | 0.165 | 0.159 | 0.163 | 0.152 | 0.164 | 0.112 | 0.17 | 0.171 |
| | (a) Index of tan δ (70°C) (target: ≥95) | | 104 | 108 | 103 | 108 | 101 | 111 | 102 | 103 | 101 | 100 | 104 | 108 | 106 | 113 | 105 | 154 | 101 | 101 |
| | (b) Index of sheet processability (target: ≥90) | | 115 | 105 | 115 | 115 | 115 | 105 | 95 | 100 | 90 | 105 | 115 | 115 | 115 | 105 | 100 | 100 | 105 | 125 |
| | (c) Index of handling stability (sensory evaluation) (target: ≥100) | | 120 | 110 | 135 | 120 | 120 | 110 | 135 | 135 | 125 | 110 | 130 | 135 | 135 | 150 | 150 | 105 | 140 | 130 |
| | (d) Index of ride comfort (sensory evaluation) (target: ≥100) | | 115 | 115 | 115 | 115 | 115 | 110 | 105 | 105 | 110 | 110 | 110 | 105 | 105 | 100 | 100 | 135 | 100 | 109 |
| | [(a)+(b)+(c)+(d)]/4 | | 114 | 110 | 117 | 115 | 113 | 109 | 109 | 111 | 107 | 106 | 115 | 116 | 115 | 117 | 114 | 123 | 112 | 116 |

[Table 4]

| | | | Comparative Examples | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Composition (parts by mass) | NR | | 60 | 60 | 60 | 60 | 52.8 | 12 | 42 | 60 | 42 | 60 | 60 |
| | IR | | — | — | — | — | — | — | — | — | — | — | — |
| | BR 1 | | 40 | 40 | 40 | — | 40 | 40 | 40 | 22 | 40 | 40 | 40 |
| | BR 2 | | — | — | — | 40 | — | — | — | — | — | — | — |
| | MB | No. | — | — | — | — | (1) | (3) | (4) | (5) | (6) | — | — |
| | | Amount | | | | | 8 | 60 | 20 | 20 | 20 | | |
| | | (Rubber content) | — | — | — | — | 7.2 | 48 | 18 | 18 | 18 | — | — |
| | | (Fiber content) | | | | | 0.8 | 12 | 2 | 2 | 2 | | |
| | Microfibrillated plant fibers | | — | — | — | — | — | — | — | — | — | 3 | 8 |
| | Carbon black 1 | | — | — | — | — | — | — | — | — | — | — | — |
| | Carbon black 2 | | 55 | 45 | 65 | 47 | 50 | 50 | 50 | 50 | 50 | 50 | 50 |
| | Silica | | — | — | — | — | — | — | — | — | — | — | — |
| | Calcium carbonate | | — | — | — | — | — | — | — | — | — | — | — |
| | C5 petroleum resin | | 2 | 2 | 2 | 2 | 2 | 2 | 2 | 2 | 2 | 2 | 2 |
| | Oil | | 8 | 8 | 8 | 8 | 8 | 8 | 8 | 8 | 8 | 8 | 8 |
| | Zinc oxide | | 4 | 4 | 4 | 4 | 4 | 4 | 4 | 4 | 4 | 4 | 4 |
| | Stearic acid | | 2 | 2 | 2 | 2 | 2 | 2 | 2 | 2 | 2 | 2 | 2 |
| | Antioxidant | | 3 | 3 | 3 | 3 | 3 | 3 | 3 | 3 | 3 | 3 | 3 |
| | 10% Oil-containing insoluble sulfur | | 2 | 2 | 2 | 2 | 2 | 2 | 2 | 2 | 2 | 2 | 2 |
| | Vulcanization accelerator | | 0.7 | 0.7 | 0.7 | 0.7 | 0.7 | 0.7 | 0.7 | 0.7 | 0.7 | 0.7 | 0.7 |
| Evaluation | E* in tire circumferential direction (E*a) (70°C) | | 4.75 | 3.22 | 5.85 | 4.55 | 4.12 | 14.8 | 4.74 | 3.95 | 4.98 | 4.85 | 9.24 |
| | E* in tire radial direction (E*b) (70°C) | | 4.66 | 3.16 | 5.68 | 3.86 | 3.49 | 4.74 | 3.79 | 2.99 | 3.77 | 3.01 | 3.37 |
| | Ratio E*a/E*b (target: 1.2 to 4.0) | | 1.02 | 1.02 | 1.03 | 1.18 | 1.18 | 3.12 | 1.25 | 1.32 | 1.32 | 1.61 | 2.74 |
| | tan δ (70°C) (target: ≦0.175) | | 0.172 | 0.155 | 0.187 | 0.161 | 0.174 | 0.192 | 0.195 | 0.165 | 0.188 | 0.209 | 0.224 |
| | (a) Index of tan δ (70°C) (target: ≧95) | | 100 | 111 | 92 | 107 | 99 | 89 | 88 | 104 | 91 | 82 | 77 |
| | (b) Index of sheet processability (target: ≧90) | | 100 | 105 | 100 | 115 | 100 | 70 | 81 | 60 | 90 | 60 | 50 |
| | (c) Index of handling stability (sensory evaluation) (target: ≧100) | | 100 | 80 | 120 | 100 | 90 | 150 | 110 | 105 | 110 | 110 | 140 |
| | (d) Index of ride comfort (sensory evaluation) (target: ≧100) | | 100 | 115 | 70 | 105 | 110 | 95 | 110 | 125 | 110 | 115 | 110 |
| | [(a)+(b)+(c)+(d)]/4 | | 100 | 103 | 95 | 107 | 100 | 101 | 97 | 99 | 100 | 92 | 94 |

Tables 3 and 4 show that, in Examples in which the MB containing a modified natural rubber with a phosphorus content of 200 ppm or less and microfibrillated plant fibers was used, the properties in terms of rolling resistance, sheet processability, handling stability, and ride comfort were improved in a balanced manner.

In contrast, in Comparative Examples 1 to 3 in which no MB was used, any of the properties in terms of rolling resistance, sheet processability, handling stability, and ride comfort was very poor, and the balance of the properties was poor.

In Comparative Example 4, owing to the use of VCR617, the handling stability and sheet processability were good, but the ratio E*a/E*b was inferior to the Examples.

In Comparative Example 5, since the amount of microfibrillated plant fibers was small, the handling stability was poor.

In Comparative Example 6, since the amount of microfibrillated plant fibers was large, the ride comfort was poor.

In Comparative Examples 7 to 9, since no HPNR was used, the microfibrillated plant fibers were not sufficiently dispersed. Therefore, the fuel economy and handling stability were poor.

In Comparative Examples 10 and 11, since the microfibrillated plant fibers were introduced upon kneading, the microfibrillated plant fibers were not sufficiently dispersed. Therefore, the fuel economy and sheet processability were very poor.

## Claims

1. A masterbatch, comprising:

   a modified natural rubber with a phosphorus content of 200 ppm or less; and
   microfibrillated plant fibers.

2. The masterbatch according to claim 1,
   wherein the microfibrillated plant fibers in a primary form have an average fiber diameter of 4 nm to 10 $\mu$m and an average fiber length of 100 nm to 200 $\mu$m.

**3.** The masterbatch according to claim 1 or 2,
wherein the microfibrillated plant fibers are present in an amount of 5 to 30 parts by mass per 100 parts by mass of the modified natural rubber.

**4.** A rubber composition, comprising
the masterbatch according to any of claims 1 to 3,
wherein the microfibrillated plant fibers are present in an amount of 1 to 10 parts by mass per 100 parts by mass of the rubber component in the rubber composition.

**5.** The rubber composition according to claim 4, further comprising
at least one of carbon black having a nitrogen adsorption specific surface area of 25 to 190 $m^2/g$ and silica having a nitrogen adsorption specific surface area of 70 to 300 $m^2/g$,
wherein the rubber composition has a total content of the carbon black and the silica of 25 to 80 parts by mass per 100 parts by mass of the rubber component in the rubber composition.

**6.** The rubber composition according to claim 4 or 5,
wherein the rubber composition has a ratio (E*a/E*b) of a complex modulus E*a in an extrusion direction to a complex modulus E*b in a direction perpendicular to the extrusion direction of 1.2 to 4.0, when the complex moduli E*a and E*b are measured at a temperature of 70°C and a dynamic strain of 2%.

**7.** The rubber composition according to any of claims 4 to 6, for use in a tire component.

**8.** The rubber composition according to claim 7,
wherein the tire component is a sidewall; a clinch; a base tread; a tie gum; a bead apex; or a tread for high performance tires.

**9.** A pneumatic tire, produced using the rubber composition according to any of claims 4 to 8.

FIG. 1

Fiber diameter

Fiber length

FIG. 2

Fiber
diameter

Fiber length

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4581116 B
- JP 2009202865 A
- JP 2008075066 A
- JP 2004106796 A
- JP 2010095705 A
- JP 2008038140 A